(19) Europäisches Patentamt
European Patent Office
Office européen des brevets

(11) **EP 4 592 112 A1**

(12) **EUROPEAN PATENT APPLICATION**
published in accordance with Art. 153(4) EPC

(43) Date of publication:
**30.07.2025 Bulletin 2025/31**

(21) Application number: **23867899.9**

(22) Date of filing: **31.07.2023**

(51) International Patent Classification (IPC):
**B60J 5/10** (2006.01)     **B29C 43/18** (2006.01)
**B29C 45/14** (2006.01)     **B29C 70/42** (2006.01)

(52) Cooperative Patent Classification (CPC):
**B29C 43/18; B29C 45/14; B29C 70/42; B60J 5/10**

(86) International application number:
**PCT/JP2023/027974**

(87) International publication number:
**WO 2024/062773 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 JP 2022149322**
**09.12.2022 JP 2022196925**

(71) Applicant: **Teijin Limited
Osaka-shi, Osaka 530-0005 (JP)**

(72) Inventors:
• **KITAGAWA Masahiro
Osaka-shi, Osaka 530-0005 (JP)**
• **YOKOMIZO Hodaka
Osaka-shi, Osaka 530-0005 (JP)**
• **YOKOYAMA Keizo
Osaka-shi, Osaka 530-0005 (JP)**

(74) Representative: **Hoffmann Eitle
Patent- und Rechtsanwälte PartmbB
Arabellastraße 30
81925 München (DE)**

(54) **METHOD FOR PRODUCING MOLDED OBJECT**

(57) The present invention relates to a method for producing a molded object by integrally molding a composite material including reinforcing fibers dispersed in in-plane directions and a molding material having higher flowability than the composite material, the method comprising the following steps (1) to (3): (1) a step in which the composite material is fixed to a first mold, which has a cavity having a larger area than the composite material in a plan view, with a plurality of fixing members provided to the first mold; (2) a step in which a second mold is moved toward the composite material fixed to the first mold and the second mold is brought into contact with the composite material; and (3) a step in which the composite material and the molding material are pressed by the first mold and the second mold and integrally molded.

FIG. 1

## Description

TECHNICAL FIELD

The present invention relates to a method for manufacturing a molded body obtained by integrally molding a composite material and an injection molding material having fluidity higher than that of the composite material.

BACKGROUND ART

A composite material containing reinforcing fibers such as carbon fibers and glass fibers as reinforcing materials has high tensile strength and tensile elastic modulus, is excellent in dimensional stability because of its small linear expansion coefficient, and is further excellent in heat resistance, chemical resistance, fatigue resistance, abrasion resistance, electromagnetic wave shielding property, and X-ray transmittance. Therefore, the composite material is widely applied to automobiles, sports and leisure, aerospace, general industrial applications, and the like.

A method of integrally manufacturing a molded body from a plurality of different materials has been studied.

For example, Patent Literature 1 discloses a mold device in which a pin is fitted into a pin receiving hole while a peripheral edge portion of a skin material is pushed into and nipped by the pin receiving hole, and is pressed and held by a pressing surface of a skin material pressing frame and a skin material placing surface of a lower mold. After a molten thermoplastic resin is supplied to the space between the skin material held by the lower mold and a molding surface of an upper mold, when mold clamping is started, the molten thermoplastic resin flows, the skin material is pressed by the mold clamping and is narrowed into the mold while being extended along the mold shape, and the peripheral edge portion of the skin material is simultaneously slides between the pin and the pin receiving hole and between the pressing surface and the skin material placing surface and is drawn toward the inside of the mold.

Patent Literature 2 discloses using, as a mold for manufacturing a fiber-reinforced thermoplastic resin molded body through press-molding of a sheet material in which a discontinuous fiber-reinforced thermoplastic resin layer is stacked on at least a part of one surface of a continuous fiber-reinforced thermoplastic resin layer, a mold provided with, on an outer peripheral edge of the cavity, a frame-shaped ingate portion that prevents the discontinuous fiber-reinforced thermoplastic resin layer from flowing out of the cavity when the upper mold and the lower mold are closed, while forming a gap for extending the continuous fiber-reinforced thermoplastic resin layer to the outside of the cavity.

Patent Literature 3 discloses disposing an auxiliary mold that is in close contact with an outer peripheral wall of a lower mold of a stamping mold and can vertically slide, and indicates that when a thermoplastic resin melt between the upper mold and the lower mold of the stamping mold is press-molded to form a base material, and a skin material is pressed against the base material, leakage of the melt from between the upper mold and the lower mold is prevented by the auxiliary mold.

Patent Literature 4 discloses a method for providing a manufacturing method in which an injection-molded product containing a plurality of sheets can be manufactured at a lower cost. In Patent Literature 4, a plurality of reinforcing member resin-impregnated sheets having a hole is arranged, a movable mold is moved to close the mold, a resin is injected, and the resin is filled between the reinforcing member resin impregnated sheets.

CITATION LIST

PATENT LITERATURE

   Patent Literature 1: JP-B-3413356
   Patent Literature 2: JP-B-5855401
   Patent Literature 3: JP-A-H09-117922
   Patent Literature 4: JP-A-2020-179549

SUMMARY OF INVENTION

TECHNICAL PROBLEM

However, in the case of integrally molding a plurality of materials differing in fluidity in a mold, there is a problem in that when a material having high fluidity flows in the mold, the position of the material having low fluidity in the mold becomes misaligned.

In the method of Patent Literature 1, the skin material is fixed by holding the skin material at an outer peripheral portion of the mold. However, the method of Patent Literature 1 cannot be applied to molding in the case where a material having low fluidity is completely disposed in a cavity of a mold, such as insert molding.

In the method of Patent Literature 2, although the ingate portion for preventing the outflow of the discontinuous fiber-reinforced thermoplastic resin layer is provided at an outer peripheral edge of the cavity, no method of fixing the sheet material is described.

In the method of Patent Literature 3, the skin material is held outside the mold by a jig. However, the method of Patent Literature 3 cannot be applied to molding in the case where a material having low fluidity is completely disposed in a cavity of a mold, such as insert molding.

In the method of Patent Literature 4, as the reinforcing member resin-impregnated sheet, a sheet obtained by impregnating a plain woven cloth formed from glass fibers having a wire diameter of about 17 μm with a polypropylene resin is used. When a material in which reinforcing fibers are continuous and oriented in a specific direction such as a plain woven cloth is used, it is difficult to obtain desired physical properties if even a slight deviation occurs in arrangement when an injection material is charged and press-molded (even when a deviation of a few millimeters occurs). Therefore, it is necessary to take measures such as devising a mold so that the reinforcing member resin-impregnated sheets are not displaced. In particular, in the case of attempting to impregnate a plurality of reinforcing member sheets with a resin, the process becomes too complicated.

An object of the present invention is to provide a method for manufacturing a molded body, in which when a composite material and a molding material having fluidity higher than that of the composite material are integrally molded, the position of the composite material in a mold can be prevented from becoming misaligned without fixing the composite material at an outer peripheral portion of a cavity of the mold.

SOLUTION TO PROBLEM

To solve the above problems, this invention provides the following means.

<1> A method for manufacturing a molded body integrally molded by a composite material containing reinforcing fibers dispersed in an in-plane direction and a molding material having fluidity higher than that of the composite material, the method including the following steps (1) to (3):

(1) fixing the composite material to a first mold by a plurality of fixing members provided in the first mold having a cavity having an area larger than that of the composite material in a plan view;
(2) moving a second mold toward the composite material fixed to the first mold and bringing the second mold into contact with the composite material; and
(3) pressing the composite material and the molding material by the first mold and the second mold to integrally mold same.

<2> The method for manufacturing a molded body according to <1>, further including
a step of releasing the fixing of the composite material by the fixing members.
<3> The method for manufacturing a molded body according to <1> or <2>, including
a step of stacking the molding material on the composite material before the step (1).
<4> The method for manufacturing a molded body according to <3>, in which
the composite material is fixed to the first mold so that the molding material comes into contact with the first mold in the step (1).
<5> The method for manufacturing a molded body according to <1> or <2>, in which
the composite material is fixed to the first mold such that the molding material is disposed on a side opposite to the first mold in the step (1).
<6> The method for manufacturing a molded body according to <1> or <2>, including
a step of stacking the molding material on the composite material after the step (1) and before the step (2).
<7> The method for manufacturing a molded body according to <1> or <2>, in which

the molding material is an injection molding material, and
the method includes a step of injecting the molding material into a space between the first mold and the second mold after the step (2) and before the step (3).

<8> The method for manufacturing a molded body according to <2>, in which

the molding material is an injection molding material, and
the method includes a step of injecting the molding material into a space between the first mold and the second mold after the step (2) and before the step of releasing the fixing of the composite material by the fixing members.

<9> The method for manufacturing a molded body according to <7> or <8>, in which
the molding material is injected into a space between the first mold and the composite material.
<10> The method for manufacturing a molded body according to <7> or <8>, in which
the molding material is injected into a space between the second mold and the composite material.
<11> The method for manufacturing a molded body according to any one of <1> to <10>, in which
the first mold and the second mold are a pair of male and female molds.
<12> The method for manufacturing a molded body according to <11>, in which

the first mold is a fixed mold, and
the second mold is a movable mold.

<13> The method for manufacturing a molded body according to <11> or <12>, in which

the first mold is a lower mold, and
the second mold is an upper mold.

<14> The method for manufacturing a molded body according to any one of <1> to <13>, in which
the fixing member is a hole forming member for forming a hole in the molded body.
<15> The method for manufacturing a molded body according to any one of <1> to <14>, in which
the reinforcing fibers are randomly dispersed in a two-dimensional direction in an in-plane direction of the composite material.
<16> The method for manufacturing a molded body according to <12>, in which

the molding material is an injection molding material,
the method includes a step of injecting the injection molding material into a space between the first mold and the second mold after the step (2) and before the step (3), and
injection is performed from the first mold.

<17> The method for manufacturing a molded body according to <16>, in which a design surface is formed by the second mold, and the space between the second mold and the composite material is filled with the injection molding material.
<18> The method for manufacturing a molded body according to <17>, in which one or more flow holes for allowing the injection molding material to pass through the composite material are provided, and the injection molding material injected from the first mold flows through the flow hole and is injected into the space between the first mold and the second mold.
<19> The method for manufacturing a molded body according to <18>, in which the first mold has a first gate for injecting the injection molding material into a mold in a region in which the composite material is disposed in a plan view.
<20> The method for manufacturing a molded body according to <16>, in which a design surface is formed by the second mold, and a resin sheet is disposed between the second mold and the composite material.
<21> The method for manufacturing a molded body according to <17> or <20>, in which the design surface has a grain shape formed by the second mold.
<22> The method for manufacturing a molded body according to any one of <1> to <12>, in which the first mold is a fixed mold, the second mold is a movable mold, the molded body is manufactured by opening and closing molds by moving the second mold in a horizontal direction, and at least two fixing members having different positions in a height direction are provided.
<23> The method for manufacturing a molded body according to any one of <1> to <12>, in which the first mold is a fixed mold, the second mold is a movable mold, the molded body is manufactured by opening and closing molds by moving the second mold in a horizontal direction, and at least two fixing members having different positions in the horizontal direction are provided.
<24> The method for manufacturing a molded body according to any one of <1> to <23>, in which the composite material has a shape cut out by pattern cutting.
<25> The method for manufacturing a molded body according to <19>, in which

a second gate for injecting the injection molding material is provided in a region of the first mold other than a region in which the composite material is disposed in a plan view, and

the number n1 of the first gates and the number n2 of the second gates satisfy 0 < n1 < n2.

<26> The method for manufacturing a molded body according to <19> or <25>, in which

the first mold has a second gate for injecting the injection molding material in a region other than a region in which the composite material is disposed in a plan view, and
a discharge amount V1 of the injection molding material from the first gate and a discharge amount V2 of the injection molding material from the second gate satisfy 0 < V1 < V2.

ADVANTAGEOUS EFFECTS OF INVENTION

According to the method for manufacturing a molded body of the present invention, when a composite material and a molding material having fluidity higher than that of the composite material are integrally molded, the position of the composite material in the mold can be prevented from becoming misaligned without fixing the composite material at the outer peripheral portion of the cavity of a mold. By using a composite material containing reinforcing fibers dispersed in the in-plane direction, the basic mechanical properties do not significantly change even if the composite material slightly flows during molding. Further, the shape followability is also improved as compared with those using continuous fibers such as a plain woven cloth.

BRIEF EXPLANATION OF DRAWINGS

FIG. 1 is a cross-sectional view of a molded body 1 according to a first embodiment of the present invention.
FIG. 2 is a schematic diagram showing a method for manufacturing the molded body 1 according to the first embodiment.
FIG. 3 is a schematic diagram showing a method for manufacturing the molded body 1 according to the first embodiment.
FIG. 4 is a schematic diagram showing a method for manufacturing the molded body 1 according to the first embodiment.
FIG. 5 is a schematic diagram showing a method for manufacturing the molded body 1 according to the first embodiment.
FIG. 6 is a schematic diagram showing a method for manufacturing the molded body 1 according to the first embodiment.
FIG. 7 is a cross-sectional view of a molded body 101 according to a second embodiment of the present invention.
FIG. 8 is a schematic diagram showing a method for manufacturing the molded body 101 according to the second embodiment.
FIG. 9 is a schematic diagram showing the method for manufacturing the molded body 101 according to the second embodiment.
FIG. 10 is a schematic diagram showing the method for manufacturing the molded body 101 according to the second embodiment.
FIG. 11 is a schematic diagram showing the method for manufacturing the molded body 101 according to the second embodiment.
FIG. 12 is a schematic diagram showing the method for manufacturing the molded body 101 according to the second embodiment.
FIG. 13 is a schematic diagram showing the method for manufacturing the molded body 101 according to the second embodiment.
FIG. 14 is a schematic diagram showing a method for manufacturing a molded body 201 according to a third embodiment.
FIG. 15 is a schematic diagram showing the method for manufacturing the molded body 201 according to the third embodiment.
FIG. 16 is a schematic diagram showing the method for manufacturing the molded body 201 according to the third embodiment.
FIG. 17 is a schematic diagram showing the method for manufacturing the molded body 201 according to the third embodiment.
FIG. 18 is a schematic diagram showing the method for manufacturing the molded body 201 according to the third embodiment.
FIG. 19 is a schematic diagram showing the method for manufacturing the molded body 201 according to the third embodiment.

FIG. 20 is a schematic diagram showing a method for manufacturing a molded body 301 according to a fourth embodiment.

FIG. 21 is a schematic diagram showing the method for manufacturing the molded body 301 according to the fourth embodiment.

FIG. 22 is a schematic diagram showing the method for manufacturing the molded body 301 according to the fourth embodiment.

FIG. 23 is a schematic diagram showing the method for manufacturing the molded body 301 according to the fourth embodiment.

FIG. 24 is a schematic diagram showing the method for manufacturing the molded body 301 according to the fourth embodiment.

FIG. 25 is a schematic diagram showing the method for manufacturing the molded body 301 according to the fourth embodiment.

FIG. 26 is a horizontal cross-sectional view showing a first mold 410 and a second mold 420 provided so as to be openable and closable in a horizontal direction.

FIG. 27 is a perspective view of a box-shaped molded body 100.

FIG. 28 is a schematic view of a composite material having a pattern-cut shape.

FIG. 29 is a front view showing the first mold in a state in which the pattern-cut composite material is fixed by fixing members.

FIG. 30 is a horizontal cross-sectional view showing a first mold 510 and a second mold 520 in which the composite material is fixed by fixing members 512.

FIG. 31 is a plan view of a first mold 610.

DESCRIPTION OF EMBODIMENTS

Hereinafter, embodiments of the present invention will be described in detail.

[First embodiment]

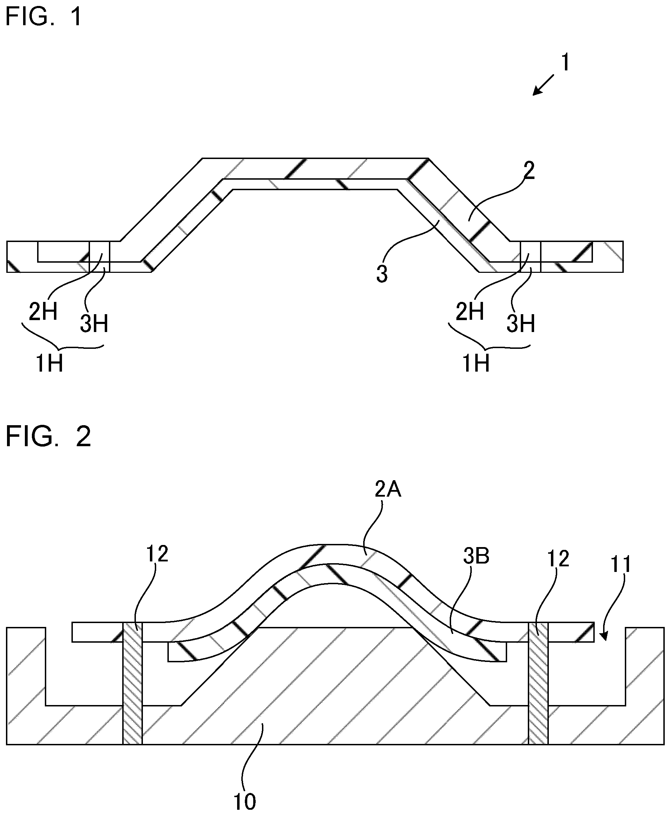

FIG. 1 is a schematic cross-sectional view of a molded body 1 according to a first embodiment of the present invention, and FIGS. 2 to 6 are schematic diagrams showing a method for manufacturing the molded body 1. In the molded body 1, a reinforcing part 2 formed from a composite material 2A and a body part 3 formed from a molding material 3B having fluidity higher than that of the composite material 2A are integrally molded.

[Composite material]

The composite material 2A contains reinforcing fibers and a matrix resin. In the composite material 2A, the reinforcing fibers are dispersed in the matrix resin in the in-plane direction.

[Reinforcing fiber]

The reinforcing fibers are preferably at least one kind selected from the group consisting of carbon fibers, aramid fibers, and glass fibers, and are more preferably carbon fibers or glass fibers.

[Carbon fiber]

1. Carbon Fiber in General

As the carbon fibers, polyacrylonitrile (PAN)-based carbon fibers, petroleum and coal pitch-based carbon fibers, rayon-based carbon fibers, cellulose-based carbon fibers, lignin-based carbon fibers, and phenol-based carbon fibers are generally known. Any of these carbon fibers can be suitably used in the present invention. Among them, polyacrylonitrile (PAN)-based carbon fibers are preferably used in the present invention because of their excellent tensile strength. Carbon fiber "Tenax" (registered trademark) STS40-24KS (average fiber diameter: 7 $\mu$m) manufactured by TEIJIN LIMITED can be used as the PAN-based carbon fiber, for example.

2. Sizing Agent for Carbon Fiber

A sizing agent may be attached to surfaces of the carbon fibers. When carbon fibers to which a sizing agent is attached are used, the type of the sizing agent can be appropriately selected according to the types of the carbon fibers and the types of the resin used for the composite material or the injection molding material, and is not particularly limited.

[Glass Fiber]

1.·Glass Fiber in General

The glass fibers may be any type of glass fibers commonly referred to as glass fibers. The glass composition is not particularly limited to glass compositions such as A-glass, C-glass, and E-glass defined in JIS R3140:2006, and may optionally contain components such as $TiO_2$, $SO_3$, and $P_2O_5$. As the glass fibers, for example, glass fiber E-glass RS 240QR-483 (count: 2400 g/1000 m) manufactured by NITTO BOSEKI CO., LTD. can be used.

2. Sizing Agent for Glass Fiber

The glass fiber may have a sizing agent attached to its surface. When glass fibers to which a sizing agent is attached are used, the type of the sizing agent can be appropriately selected according to the types of the glass fibers, and is not particularly limited. The glass fibers can be preferably used after being treated in advance with a conventionally known coupling agent such as an organosilane-based compound, an organotitanium-based compound, an organoborane-based compound, and an epoxy-based compound.

[Dispersion in in-plane direction]

It is preferable that the reinforcing fibers contained in the composite material be dispersed in the in-plane direction.

Dispersing the reinforcing fibers in the in-plane direction means dispersing the fiber axes of the reinforcing fibers so as to be directed in the in-plane direction. An angle between the fiber axis of the reinforcing fibers and the in-plane direction is preferably 45° or less.

1. In-plane direction

The composite material 2A is preferably a plate-shaped material. The in-plane direction is an arbitrary direction parallel to a plane orthogonal to the plate thickness direction of the composite material 2A.

2. Random distribution in two-dimensional direction

It is preferable that the reinforcing fibers be randomly dispersed in a two-dimensional direction in an in-plane direction of the composite material 2A. In the case of press molding without flowing the composite material 2A, since the form of the reinforcing fibers is substantially maintained before and after molding, it is preferable that the reinforcing fibers contained in the reinforcing part 2 obtained by molding the composite material 2A be similarly randomly dispersed in two dimensions in an in-plane direction.

Here, randomly dispersed in two dimensions refers to a state in which reinforcing fibers are randomly oriented in an in-plane direction of the composite material 2A or the reinforcing part 2 rather than in a specific direction such as one direction, and are generally arranged in a sheet plane without exhibiting specific directivity as a whole. The composite material 2A (or the reinforcing part 2) obtained by using discontinuous fibers dispersed randomly in two dimensions is substantially isotropic with no in-plane anisotropy.

The orientation degree indicating the extent to which the reinforcing fibers are randomly dispersed in two dimensions in the in-plane direction of the composite material 2A or the reinforcing part 2 is evaluated by calculating the ratio of the tensile elastic moduli of the composite material 2A in two directions orthogonal to each other. When the ratio ($E\delta$) obtained by measuring the tensile modulus of elasticity of the composite material 2A (or the reinforcing part 2) in each of an arbitrary direction and the direction orthogonal thereto and dividing the larger one of the measured values by the smaller one is 5 or less, more preferably 2 or less, and still more preferably 1.5 or less, it can be evaluated as follows: the reinforcing fibers are randomly dispersed in two dimensions. When the reinforcing part 2 has a curved surface, as an evaluation method of the extent (orientation degree) to which the reinforcing fibers are randomly dispersed in two dimensions in the in-plane direction of the reinforcing part 2, it is preferable to heat the molded body 1 to a softening temperature or higher to return the shape thereof to a flat plate, take out only the reinforcing part 2, and solidify same. Thereafter, the test piece is cut out from the reinforcing part 2 that has returned to the flat plate shape, and the tensile elastic moduli of the test piece in two directions orthogonal to each other are obtained, so that the two-dimensional random distribution in the reinforcing part 2 can be evaluated.

[Fiber length of reinforcing fibers contained in composite material]

The weight average fiber length LwA of the reinforcing fibers contained in the composite material 2A is preferably 1 mm or more, and more preferably 3 mm or more.

When LwA is 100 mm or less, fluidity of the material is less likely to decrease when the composite material 2A is press-molded, and the reinforcing part 2 is easily manufactured into a desired shape. When LwA is 1 mm or more, the mechanical strength of the obtained reinforcing part 2 is less likely to decrease, which is preferable.

Since the weight average fiber length LwA of the reinforcing fibers contained in the composite material 2A does not change before and after molding, the weight average fiber length LwA of the reinforcing fibers having been contained in the composite material 2A can be obtained by examining the weight average fiber length of the reinforcing fibers contained in the reinforcing part 2.

The weight average fiber length LwA of the reinforcing fibers contained in the composite material 2A is preferably 3 mm or more and 100 mm or less, more preferably 3 mm or more and 80 mm or less, and still more preferably 5 mm or more and 60 mm or less.

The weight average fiber length of the reinforcing fibers is obtained by formula (1) described later.

[Molding material]

The molding material 3B for forming the body part 3 contains a matrix resin. Further, the molding material 3B preferably contains reinforcing fibers. The reinforcing fibers contained in the molding material 3B are preferably the above-described carbon fibers or glass fibers.

The molding material 3B has fluidity higher than that of the composite material 2A. The molding material 3B having fluidity higher than that of the composite material 2A can be produced by making the fiber volume fraction (Vf) of the molding material 3B lower than the fiber volume fraction (Vf) of the composite material 2A. By making the weight average fiber length of the reinforcing fibers contained in the molding material 3B shorter than the weight average fiber length of the reinforcing fibers contained in the composite material 2A, the fluidity of the molding material 3B can be increased compared to the fluidity of the composite material 2A.

[Fiber length of reinforcing fibers contained in molding material]

The molding material 3B preferably contains reinforcing fibers having a weight average fiber length LwB and satisfying LwB < LwA. In the case of LwB < LwA, since the mechanical strength of the reinforcing part 2 formed by the composite material 2A is higher than the mechanical strength of the body part 3 formed by the molding material 3B, the molded body 1 can be reinforced by the reinforcing part 2.

The molding material 3B may be an injection molding material. When the molding material 3B is injected into a mold to mold same to obtain the body part 3, the molding material 3B immediately before injection is called an injection molding material. When there is a step of kneading the molding material 3B before injection, the molding material 3B after kneading is called an injection molding material.

The weight average fiber length LwB of the reinforcing fibers contained in the molding material 3B is preferably less than 3 mm. The weight average fiber length LwB is more preferably 0.01 mm or more and less than 3 mm. The lower limit of the weight average fiber length LwB is preferably 0.01 mm or more, more preferably 0.05 mm or more, and still more preferably 0.1 mm or more. When the weight average fiber length LwB is 0.01 mm or more, the mechanical strength of the body part 3 is ensured. On the other hand, the upper limit of the weight average fiber length LwB is preferably less than 3 mm, more preferably less than 2 mm, and still more preferably less than 1 mm.

When the weight average fiber length LwB is 1.0 mm or less, the body part 3 can be manufactured by an injection molding material obtained by kneading the molding material 3B. In general, the weight average fiber length LwB of the reinforcing fibers contained in the injection molding material obtained by sufficiently kneading the molding material 3B is less than 1 mm.

The weight average fiber length of the reinforcing fibers is obtained by formula (1) described later.

[Weight average fiber length Lw]

Generally, when the fiber length of each reinforcing fiber is denoted as $L_i$, the weight average fiber length Lw is obtained according to formula (1) below. The unit of the weight average fiber length Lw is mm.

[Mathematical formula 1]

$$L_w = \left( \sum_{i=1}^{I} L_i^{\,2} \right) \Big/ \left( \sum_{i=1}^{I} L_i \right) \quad \cdots \text{Formula (1)}$$

Here, "I" represents the number of measured reinforcing fibers.

The reinforcing fibers can be extracted from the reinforcing part 2 and the body part 3 by, for example, heat treatment at 500°C for about 1 hour and removing the matrix resin in a furnace.

The weight average fiber length Lw can be obtained, for example, by measuring the fiber lengths $L_1$ to $L_{100}$ of 100 (I = 100) fibers randomly extracted from each of the reinforcing part 2 and the body part 3 after the heat treatment in the unit of 1 mm using a vernier caliper or the like, and calculating using formula (1).

When short reinforcing fibers which cannot be measured by a vernier caliper are contained, it is preferable to put the obtained reinforcing fibers into water containing a surfactant after removing the matrix resin, sufficiently stir same by ultrasonic vibration, randomly collect the stirred dispersion of the reinforcing fibers with a measuring spoon to obtain an evaluation sample, and measure the lengths of 3000 reinforcing fibers (I = 3000) with an image analysis device Luzex AP manufactured by NIRECO CORPORATION. Using the measured fiber lengths $L_1$ to $L_{3000}$, the weight average fiber length Lw can be obtained similarly as in formula (1) above.

[Volume fraction of reinforcing fibers in composite material and molding material]

For each of the composite material 2A and the molding material 3B, a volume fraction (Vf) of the reinforcing fibers can be obtained by formula (2) below.

The reinforcing fiber volume fraction is not particularly limited, but the reinforcing fiber volume fraction (Vf) is preferably 10 vol% to 60 vol%, more preferably 20 vol% to 50 vol%, and still more preferably 25 vol% to 45 vol%.

volume fraction of reinforcing fibers (Vf) = 100 × volume of reinforcing fibers/(volume of reinforcing fibers + volume of resin)　　　Formula (2):

In the present invention, it is preferable from the viewpoint of the manufacturing process that the volume fraction Vfb of the reinforcing fibers of the molding material 3B and the volume fraction Vfa of the carbon fibers of the composite material 2A satisfy the relationship of Vfa ≥ Vfb. For example, Vfa > Vfb is often satisfied when a material obtained by crushing an offcut of the composite material 2A collected from a manufacturing process or a product is used as the molding material 3B, or when a material obtained by crushing a offcut and then further adding a thermoplastic resin thereto is used as the molding material 3B to manufacture the body part 3. That is, by employing a manufacturing method achieving Vfa ≥ Vfb, it is possible to efficiently use offcuts remaining after cutting out the composite material 2A or to easily recycle the material.

Vfa is preferably 20 Vol% to 45 Vol%, more preferably 25 Vol% to 40 Vol%.

Vfb is preferably 1 vol% to 40 vol%, more preferably 5 vol% to 30 Vol%, and still more preferably 10 vol% to 25 vol%.

[Analysis of Volume fraction (Vf) of Reinforcing Fibers]

The analysis of the volume fraction of the reinforcing fibers is not limited, but it is preferable to measure as follows.

A sample is cut out from the reinforcing part 2 or the body part 3, and the resin is burned and removed in a furnace at 500°C for 1 hour, and the mass of the sample before and after the treatment is weighed to calculate the mass of the reinforcing fibers and the mass of the resin. Next, the volume fraction of the reinforcing fibers and the resin is calculated using the specific gravity of each component.

Vf = 100 × Volume of reinforcing fibers/(Volume of reinforcing fibers + Volume of resin)

[Resin]

The matrix resin contained in the composite material 2A and the matrix resin contained in the molding material 3B may be thermosetting or thermoplastic.

1. Thermoplastic Resin

### 1.1. Overview

When the resin to be used is a thermoplastic resin, the type thereof is not particularly limited, and a resin having a desired softening point or melting point can be appropriately selected and used. As the thermoplastic resin, a thermoplastic resin having a softening point in a range of 180°C to 350°C is generally used, but the thermoplastic resin is not limited thereto.

Examples of the thermoplastic resin include a polyolefin resin, a polystyrene resin, a polyamide resin, a polyester resin, a polyacetal resin (polyoxymethylene resin), a polycarbonate resin, a (meth) acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyetherketone resin, a thermoplastic urethane resin fluorine-based resin, a thermoplastic polybenzimidazole resin, and the like.

The thermoplastic resin used for the composite material 2A and the molding material 3B may be only one type, or may be two or more types. Example of a mode in which two or more types of thermoplastic resins are used in combination include, but not limited to, a mode in which thermoplastic resins having different softening points or melting points are used in combination, and a mode in which thermoplastic resins having different average molecular weights are used in combination.

When a thermoplastic resin is used, it is more preferable to use a polyolefin resin, and even more preferable to use a polypropylene resin.

### 1.2 Resin of composite material and molding material

The resin contained in the composite material 2A is preferably a thermoplastic resin. When the resin contained in the composite material 2A is a thermoplastic resin, it is more preferable that the resin contained in the composite material 2A and the molding material 3B be the same thermoplastic resin.

### 2. Thermosetting Resin

The resin contained in the composite material 2A may be a thermosetting resin. In this case, a sheet molding compound using reinforcing fibers may be used as the composite material 2A. Due to its high formability, the sheet molding compound can be easily molded even into complex shapes. The sheet molding compounds have higher fluidity and formability than continuous fibers, and ribs and bosses can be easily formed.

### [Other agents]

The resin used for the composite material 2A or the molding material 3B may contain additives such as various fibrous fillers of organic fibers or inorganic fibers or non-fibrous fillers, a flame retardant, a UV resistance agent, a stabilizer, a mold release agent, a pigment, a softening agent, a plasticizer, and a surfactant within a range not impairing the object of the present invention.

### [Preferred combination of resin and fiber]

### [Fiber]

It is preferable that the reinforcing fibers contained in the composite material 2A be glass fibers and/or carbon fibers, and the reinforcing fibers contained in the molding material 3B be glass fibers.

Carbon fibers may be partially used as the reinforcing fibers contained in the composite material 2A, and glass fibers may be used in a portion other than the portion using carbon fibers. A location where carbon fibers are partially used in the composite material 2A is preferably a portion that becomes a peripheral portion of a hole 2H, which will be described later, of the reinforcing part 2.

### [Resin]

The resin contained in the composite material 2A may be a thermoplastic resin or a thermosetting resin, and the resin contained in the molding material 3B may be a thermoplastic resin or a thermosetting resin. While the molding material 3B contains a thermoplastic resin, a thermosetting sheet molding compound may be used for the composite material 2A.

It is preferable that the volume Va of the composite material 2A used for the reinforcing part 2 and the volume Vb of the molding material 3B used for the body part 3 satisfy a relationship of $Vb \geq Va$. Va:Vb is preferably 10:90 to 50:50, more preferably 20:80 to 40:60.

[Manufacturing method]

Next, a method for manufacturing the molded body 1 will be described. In this embodiment, the composite material 2A containing reinforcing fibers dispersed in the in-plane direction and the molding material 3B having fluidity higher than that of the composite material 2A are integrally molded to manufacture the molded body 1.

The manufacturing method for manufacturing the molded body 1 includes the following steps (1) to (3): (1) fixing the composite material 2A to the first mold 10 by a plurality of fixing members 12 provided in the first mold 10 having a cavity 11 having an area larger than that of the composite material 2A in a plan view; (2) moving a second mold 20 toward the composite material 2A fixed to the first mold 10 and bringing the second mold 20 into contact with the composite material 2A; and (3) pressing the composite material 2A and the molding material 3B by the first mold 10 and the second mold 20 to integrally mold same.

The molding material 3B may be put into the mold at an arbitrary timing before step (3). For example, the method may include a step of stacking the molding material 3B on the composite material 2A before step (1). That is, in step (1), it is preferable that the laminated body of the composite material 2A and the molding material 3B be fixed in the cavity 11 of the first mold 10 by the plurality of fixing members 12 in a state in which the composite material 2A and the molding material 3B are laminated.

In this case, it is preferable to fix the composite material 2A to the first mold 10 such that the molding material 3B comes into contact with the first mold 10 in step (1).

When the resin contained in the composite material 2A and the molding material 3B is a thermoplastic resin, cold press molding is preferably used.

A manufacturing method for manufacturing the molded body 1 by cold press molding has the following steps (0) to (3): (0) heating the composite material 2A and the molding material 3B to a first predetermined temperature; (1) fixing the composite material 2A and the molding material 3B to the first mold 10 by a plurality of fixing members 12 provided in the first mold 10 having a cavity 11 having an area larger than that of the composite material 2A in a plan view; (2) moving the second mold 20 toward the composite material 2A fixed to the first mold 10 and bringing the second mold 20 into contact with the composite material 2A; and (3) pressing the composite material 2A and the molding material 3B by the first mold 10 and the second mold 20 to integrally mold same.

(0) Heating composite material 2A to first predetermined temperature

It is preferable that the composite material 2A be previously heated to the first predetermined temperature. When the thermoplastic resin contained in the composite material 2A is crystalline, the first predetermined temperature is equal to or higher than the melting point of the thermoplastic resin and equal to or lower than the decomposition temperature of the thermoplastic resin. When the thermoplastic resin contained in the composite material 2A is amorphous, the first predetermined temperature is equal to or higher than the glass transition temperature of the thermoplastic resin and equal to or lower than the decomposition temperature of the thermoplastic resin.

In the case of cold press molding, the temperature of the first mold 10 and the temperature of the second mold 20 are adjusted to a second predetermined temperature. When the thermoplastic resin contained in the composite material 2A is crystalline, the second predetermined temperature is lower than the melting point of the thermoplastic resin. When the thermoplastic resin contained in the composite material 2A is amorphous, the second predetermined temperature is lower than the glass transition temperature of the thermoplastic resin.

As described above, cold pressing can be suitably performed by adjusting the temperatures of the composite material 2A and the first mold 10.

First, as shown in FIG. 2, the composite material 2A is fixed in the cavity 11 of the first mold 10 by the plurality of fixing members 12.

The fixing members 12 may be, for example, a slide core that forms holes 1H in the molded body 1. For example, the composite material 2A may be fixed by preliminarily providing holes 2H in the composite material 2A and inserting the fixing members 12 into the holes 2H. Alternatively, the composite material 2A may be fixed by piercing the composite material 2A with pin-shaped fixing members 12. In this case, the holes 2H may not be provided in the composite material 2A.

The composite material 2A may be pre-formed and disposed in the cavity 11 of the first mold 10 so as to be along the cavity 11 of the first mold 10.

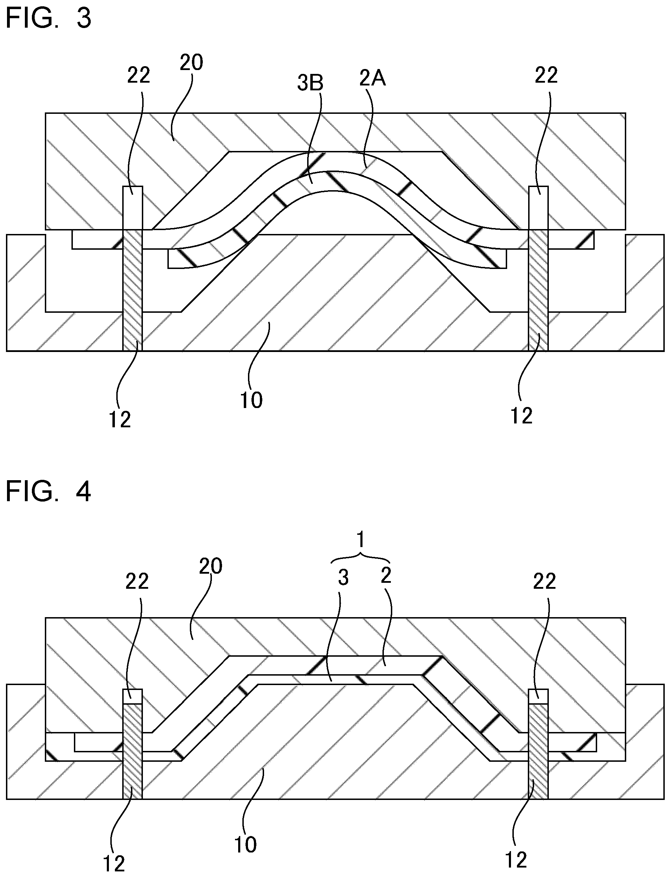

Next, as shown in FIG. 3, the second mold 20 is moved toward the composite material 2A fixed to the first mold 10, and the second mold 20 is brought into contact with the composite material 2A.

Next, as shown in FIG. 4, the composite material 2A and the molding material 3B are pressed by the first mold 10 and the second mold 20 to be integrally molded. The molding pressure is not particularly limited, but is preferably less than 20 MPa, and more preferably 10 MPa or less.

As described above, when the composite material 2A and the molding material 3B are pressed, the molding material 3B having fluidity higher than that of the composite material 2A flows in the mold. Even in this case, since the composite material 2A is fixed by the fixing members 12, it is possible to prevent the position of the composite material 2A from becoming misaligned.

When the composite material 2A and the molding material 3B are pressed, the holes 2H are formed at the positions of the composite material 2A corresponding to the fixing members 12, and holes 3H are formed at positions of the molding material 3B corresponding to the fixing members 12. That is, the fixing members 12 are hole forming members for forming the holes 1H in the molded body 1.

Holes 22 into which the fixing members 12 are inserted may be provided at positions of the second mold 20 facing the fixing members 12.

Thereafter, the second mold 20 is moved in a direction away from the first mold 10, and the molded body 1 is taken out from the first mold 10. Thus, the molded body 1 is completed.

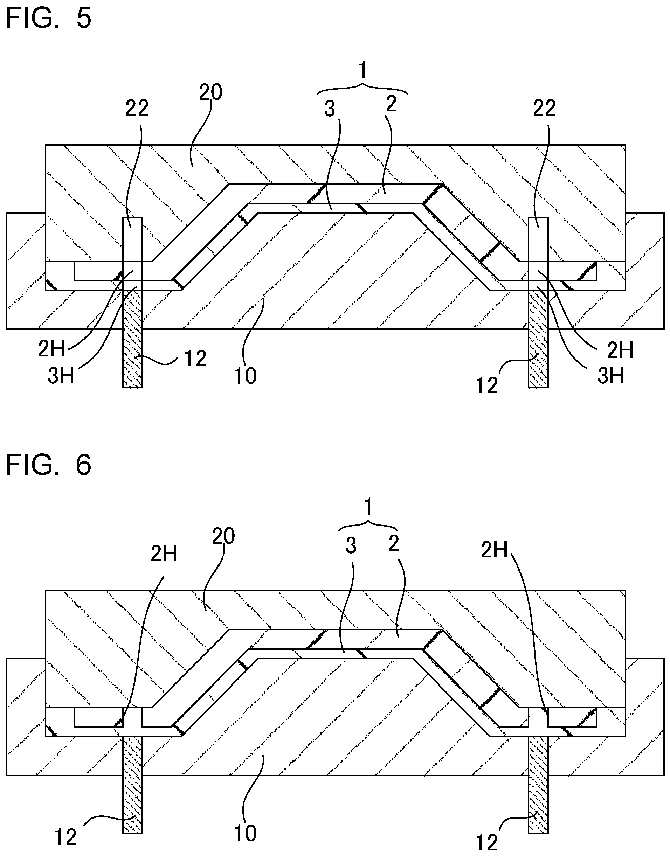

As shown in FIG. 5, the fixing members 12 may be moved and pulled out from the composite material 2A and the molding material 3B integrally molded. Accordingly, the fixing of the composite material 2A by the fixing members 12 is released. That is, the method may further include a step of releasing the fixing of the composite material 2A by the fixing members 12. The fixing of the composite material 2A by the fixing members 12 may be released after step (2), before step (3), or after step (3).

When the holes 1H are not formed in the molded body 1, the fixing members 12 may be moved as shown in FIG. 6 before the composite material 2A and the molding material 3B are pressed and integrally molded. That is, the fixing of the composite material 2A by the fixing members 12 may be released after step (2) and before step (3). In this case, even if the holes 2H are formed at the positions of the composite material 2A corresponding to the fixing members 12, when the composite material 2A and the molding material 3B are pressed by the first mold 10 and the second mold 20 and integrally molded, the molding material 3B flows into the inside of the holes 2H, and the holes 2H are thus filled.

As described above, by integrally molding the reinforcing part 2 and the body part 3, the molded body 1 having excellent joining strength between the reinforcing part 2 and the body part 3 can be obtained.

By pressing the composite material 2A and the molding material 3B having fluidity higher than that of the composite material 2A in a state in which the plate-shaped composite material 2A is disposed in the mold, it is possible to manufacture the molded body 1 having a complicated shape with ribs and bosses.

[Second embodiment]

Next, a method for manufacturing a molded body of a second embodiment will be described. The same reference numerals are assigned to the lower two digits of the same structures as in the first embodiment, and description thereof will be omitted.

In the second embodiment as well, similarly to the first embodiment, a composite material 102A and a molding material 103B may be integrally molded by cold pressing.

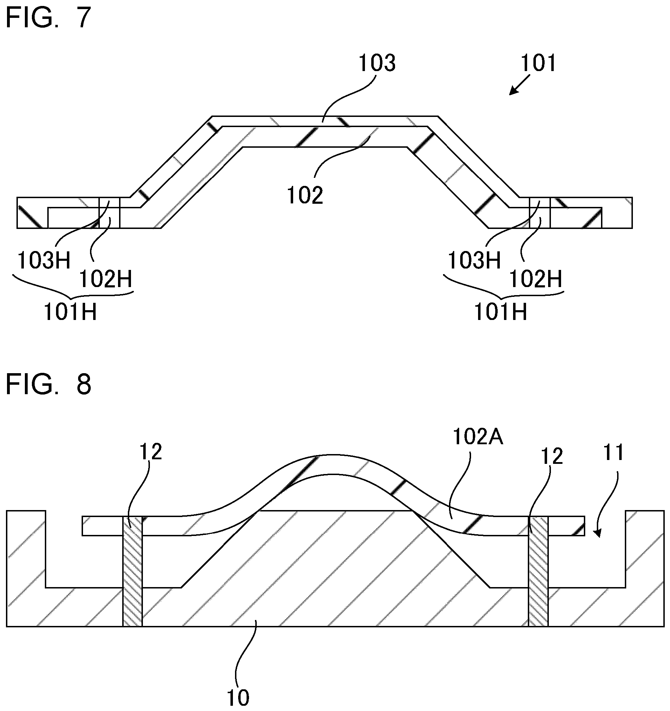

FIG. 7 is a schematic cross-sectional view of a molded body 101 according to the second embodiment of the present invention, and FIGS. 8 to 13 are schematic diagrams showing a method for manufacturing the molded body 101.

In the first embodiment, the molding material 3B is disposed so as to be in contact with the first mold 10, but in the second embodiment, the molding material 103B is disposed so as to be in contact with the second mold 20. That is, the composite material 102A is fixed to the first mold 10 such that the molding material 103B is disposed on the side opposite to the first mold 10.

A manufacturing method for manufacturing the molded body 101 of the second embodiment includes the following steps (1) to (3): (1) fixing the composite material 102A to the first mold 10 by the plurality of fixing members 12 provided in the first mold 10 having the cavity 11 having an area larger than that of the composite material 102A in a plan view; (2) moving the second mold 20 toward the composite material 102A fixed to the first mold 10 and bringing the second mold 20 into contact with the composite material 102A; and (3) pressing the composite material 102A and the molding material 103B by the first mold 10 and the second mold 20 to integrally mold same.

Specifically, as shown in FIG. 8, the composite material 102A is first fixed in the cavity 11 of the first mold 10 by the plurality of fixing members 12.

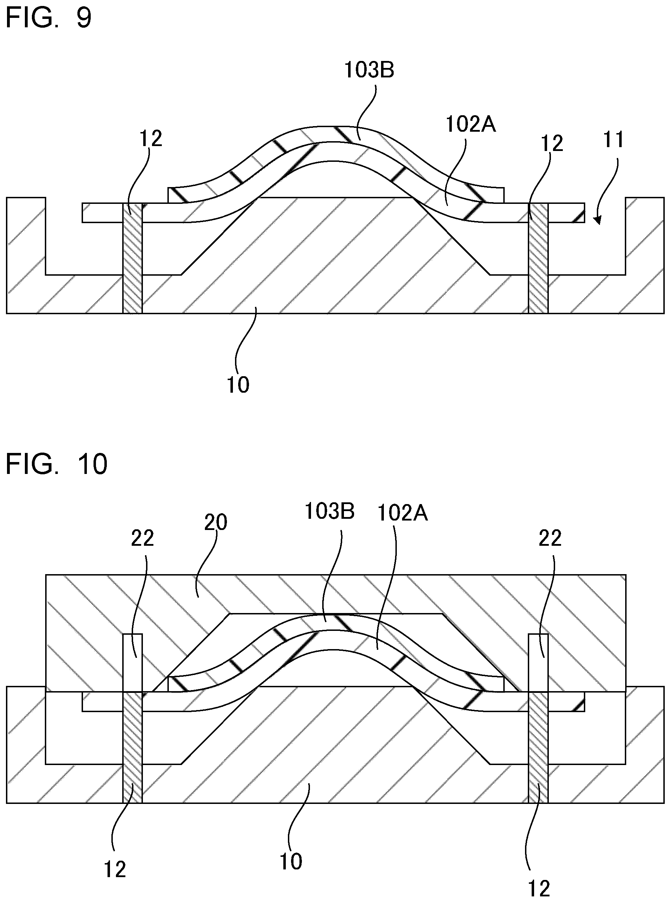

Next, as shown in FIG. 9, before step (2), the molding material 103B is stacked on the composite material 102A fixed to the first mold 10.

Before step (1), a step of stacking the molding material 103B on the composite material 102A may be included. In this case, it is preferable to fix the laminated body of the composite material 102A and the molding material 103B to the first mold 10 such that the molding material 3B is disposed on the side opposite to the first mold 10 in step (1). That is, in step (1), as shown in FIG. 9, the laminated body of the composite material 102A and the molding material 103B may be fixed in the cavity 11 of the first mold 10 by the plurality of fixing members 12 so that the molding material 103B is disposed on the side opposite to the first mold 10.

Next, as shown in FIG. 10, the second mold 20 is moved toward the composite material 102A fixed to the first mold 10, and the second mold 20 is brought into contact with the composite material 102A. At this time, the second mold 20 may be in contact with the molding material 103B stacked on the composite material 102A.

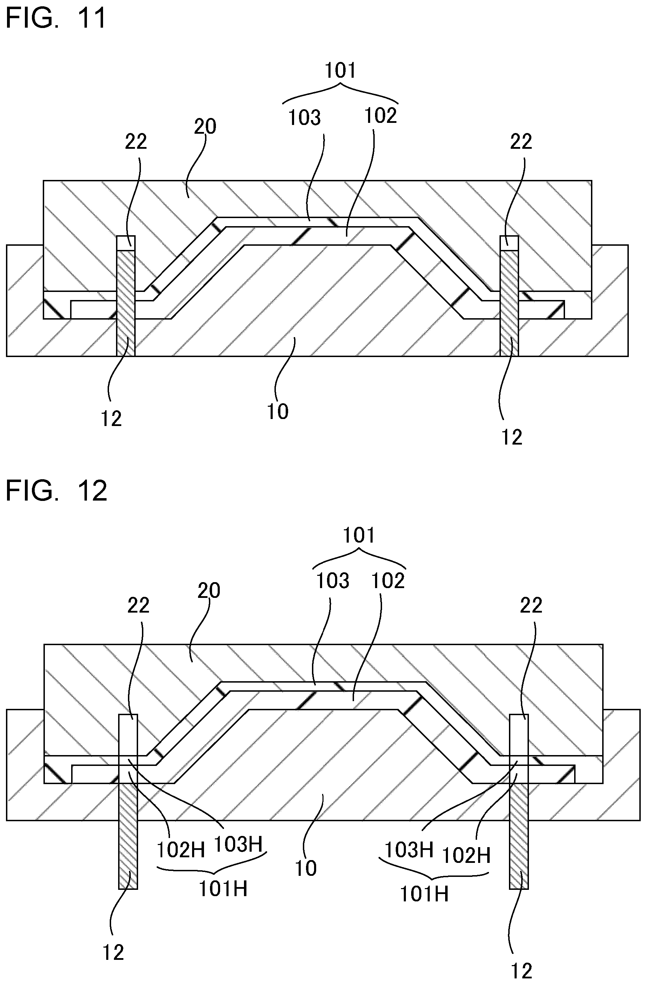

Next, as shown in FIG. 11, the composite material 102A and the molding material 103B are pressed by the first mold 10 and the second mold 20 to be integrally molded. At this time, holes 102H are formed at positions of the composite material 102A corresponding to the fixing members 12, and holes 103H are formed at positions of the molding material 103B corresponding to the fixing members 12.

Thereafter, the second mold 20 is moved in a direction away from the first mold 10, and the molded body 101 is taken out from the first mold 10. Thus, the molded body 101 is completed.

As shown in FIG. 12, the fixing members 12 may be moved and pulled out from the composite material 102A and the molding material 103B integrally molded. Accordingly, the fixing of the composite material 102A by the fixing members 12 is released. That is, the method may further include a step of releasing the fixing of the composite material 102A by the fixing members 12. The fixing of the composite material 102A by the fixing members 12 may be released after step (2), before step (3), or after step (3).

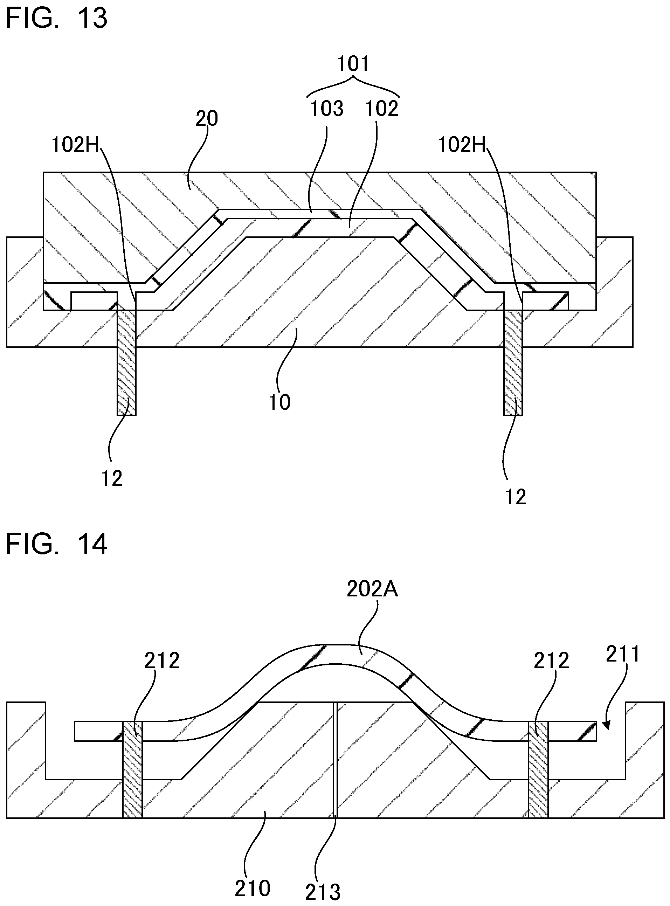

When the holes 101H are not formed in the molded body 101, the fixing members 12 may be moved as shown in FIG. 13 before the composite material 102A and the molding material 103B are pressed and integrally molded. That is, the fixing of the composite material 102A by the fixing members 12 may be released after step (2) and before step (3). In this case, even if the holes 102H are formed at the positions of the composite material 102A corresponding to the fixing members 12, when the composite material 102A and the molding material 103B are pressed by the first mold 10 and the second mold 20 and integrally molded, the molding material 103B flows into the inside of the holes 102H, and the holes 102H are thus filled.

[Third embodiment]

FIGS. 14 to 19 are schematic diagrams showing a method for manufacturing the molded body 201 according to the third embodiment of the present invention. The same reference numerals are assigned to the lower two digits of the same structures as in the first embodiment, and description thereof will be omitted.

In the third embodiment, an injection molding material 203B is used as a molding material having fluidity higher than that of the composite material. In the third embodiment, the method includes a step of injecting the molding material (injection molding material 203B) into the space between a first mold 210 and a second mold 220 after step (2) and before step (3) in the first embodiment.

Specifically, the manufacturing method for manufacturing the molded body 201 of the third embodiment includes the following steps (1) to (4): (1) fixing a composite material 202A to the first mold 210 by a plurality of fixing members 212 provided in the first mold 210 having a cavity 211 having an area larger than that of the composite material 202A in a plan view; (2) moving the second mold 220 toward the composite material 210A fixed to the first mold 210 and bringing the second mold 220 into contact with the composite material 202A; (3) injecting the injection molding material 203B into the space between the first mold 210 and the second mold 220; and (4) pressing the composite material 202A and the injection molding material 203B by the first mold 210 and the second mold 220 to integrally mold same.

Before step (1), the method may include the following step:
(0) heating the composite material 202A to a first predetermined temperature.

In this case, the first mold 210 and the second mold 220 are set to a second predetermined temperature.

Specifically, as shown in FIG. 14, the composite material 202A is first fixed in the cavity 211 of the first mold 210 by the plurality of fixing members 212.

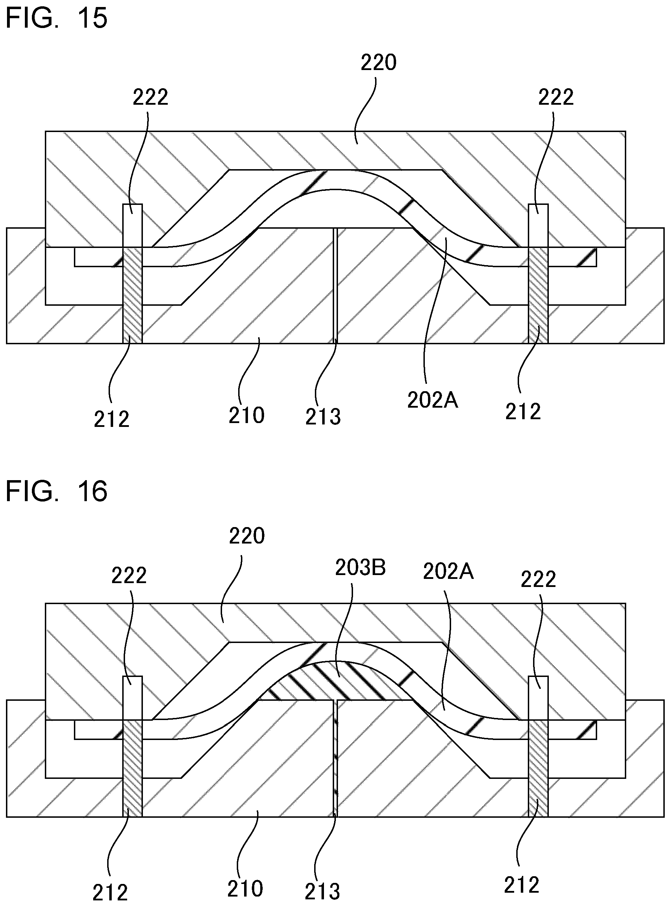

Next, as shown in FIG. 15, the second mold 220 is moved toward the composite material 202A fixed to the first mold 210, and the second mold 220 is brought into contact with the composite material 202A.

Next, as shown in FIG. 16, the injection molding material 203B is injected into the space between the first mold 210 and the composite material 202A from a gate 213 provided in the first mold 210. The timing of injecting the injection molding material 203B may be immediately before or immediately after the pressure starts to be applied from the second mold 220 to a part of the composite material 202A. In order to suppress the misalignment of the composite material 202A in the mold, it is preferable to inject the injection molding material 203B immediately after the second mold 220 comes into contact with at least a part of the composite material 202A and the pressure starts to be applied to the composite material 202A. A method of injecting the injection molding material 203B into the mold is not particularly limited, and may be performed using a conventionally known method.

At this time, the composite material 202A is pressed against the second mold 220 by the pressure of the injection molding material 203B.

The injection molding material 203B is obtained through kneading, and is preferably filled between the first mold 210 and the composite material 202A. By performing pressing after the injection molding material 203B fills the mold, misalignment of the composite material 202A can be prevented.

It is preferable that the injection molding material 203B at the time of being put into the mold be heated to a temperature equal to or higher than the melting point of the thermoplastic resin and equal to or lower than the decomposition temperature of the thermoplastic resin when the thermoplastic resin contained in the injection molding material 203B is crystalline and to a temperature equal to or higher than the glass transition temperature of the thermoplastic resin and equal to or lower than the decomposition temperature of the thermoplastic resin when the thermoplastic resin is amorphous.

In order to fill the space between the first mold 210 and the composite material 202A with the injection molding material 203B, the second mold 220 may be once stopped from being lowered before the mold is completely closed. The position at which the second mold 220 is stopped from being lowered is preferably set after the second mold 220 comes into contact with the composite material 202A. When the composite material 202A comes into contact with the second mold 220 to retard the movement of the composite material 202A, misalignment of the composite material 202A can be prevented during pressing.

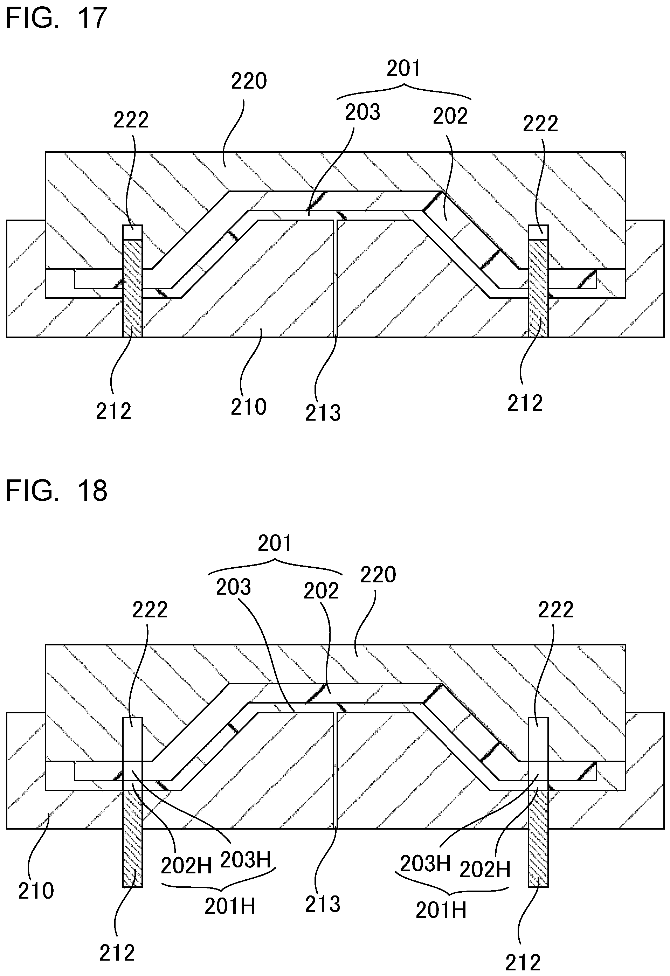

Next, as shown in FIG. 17, the composite material 202A and the injection molding material 203B are pressed in the mold and integrally molded.

At this time, holes 202H are formed at positions of the composite material 202A corresponding to the fixing members 212, and holes 203H are formed at positions of the injection molding material 203B corresponding to the fixing members 212. That is, the fixing members 212 are hole forming members for forming the holes 201H in the molded body 201.

Holes 222 into which the fixing members 212 are inserted may be provided at positions of the second mold 220 facing the fixing members 212.

Thereafter, the second mold 220 is moved in a direction away from the first mold 210, and the molded body 201 is taken out from the first mold 210. Thus, the molded body 201 is completed.

As described above, since the injection molding material 203B is injected into the mold in a state in which the composite material 202A is fixed by the fixing members 212, it is possible to prevent the position of the composite material 202A from becoming misaligned even if the injection molding material 203B flows in the mold.

As shown in FIG. 18, the fixing members 212 may be moved and pulled out from the composite material 202A and the injection molding material 203B integrally molded. Accordingly, the fixing of the composite material 202A by the fixing members 212 is released. That is, the method may further include a step of releasing the fixing of the composite material 202A by the fixing members 212. The fixing of the composite material 202A by the fixing members 212 may be released after step (3), before step (4), or after step (4). After step (2) of bringing the second mold 220 into contact with the composite material 202A, a step of injecting the injection molding material 203B between the first mold 210 and the composite material 202A may be included before the step of releasing the fixing of the composite material 202A.

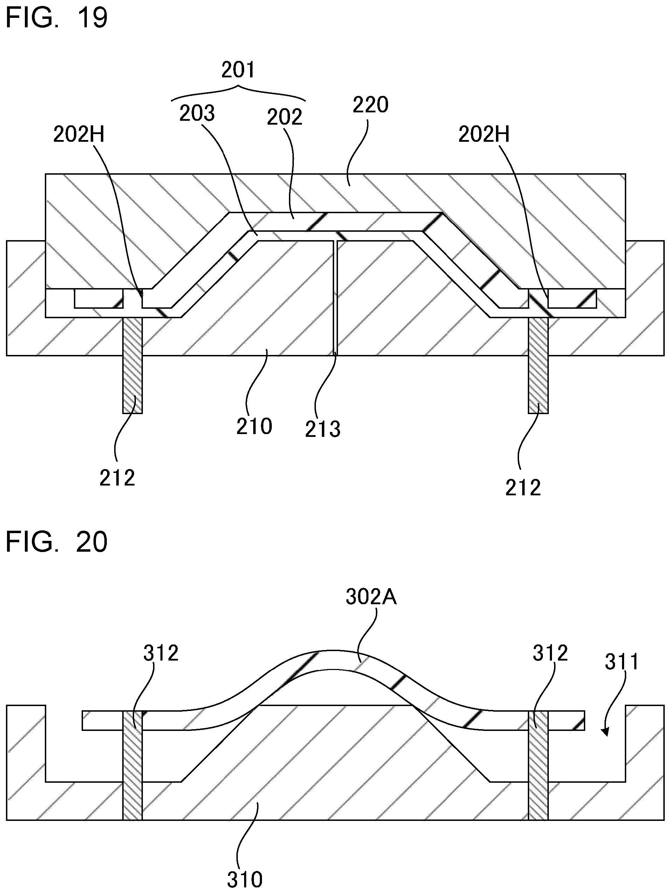

When the holes 201H are not formed in the molded body 201, the fixing members 212 may be moved as shown in FIG. 19 before the composite material 202A and the injection molding material 203B are pressed and integrally molded. That is, the fixing of the composite material 202A by the fixing members 212 may be released after step (3) and before step (4). In this case, even if the holes 202H are formed at the positions of the composite material 202A corresponding to the fixing members 212, when the composite material 202A and the injection molding material 203B are pressed by the first mold 210 and the second mold 220 and integrally molded, the injection molding material 203B flows into the inside of the holes 202H, and the holes 202H are thus filled.

[Fourth embodiment]

FIGS. 20 to 25 are schematic diagrams showing a method for manufacturing a molded body 301 according to a fourth embodiment of the present invention. The same reference numerals are assigned to the lower two digits of the same structures as in the third embodiment, and description thereof will be omitted.

The fourth embodiment is different from the third embodiment in that an injection molding material 303B is injected between a second mold 320 and a composite material 302A.

Specifically, as shown in FIG. 20, the composite material 302A is first fixed in a cavity 311 of a first mold 310 by a plurality of fixing members 312.

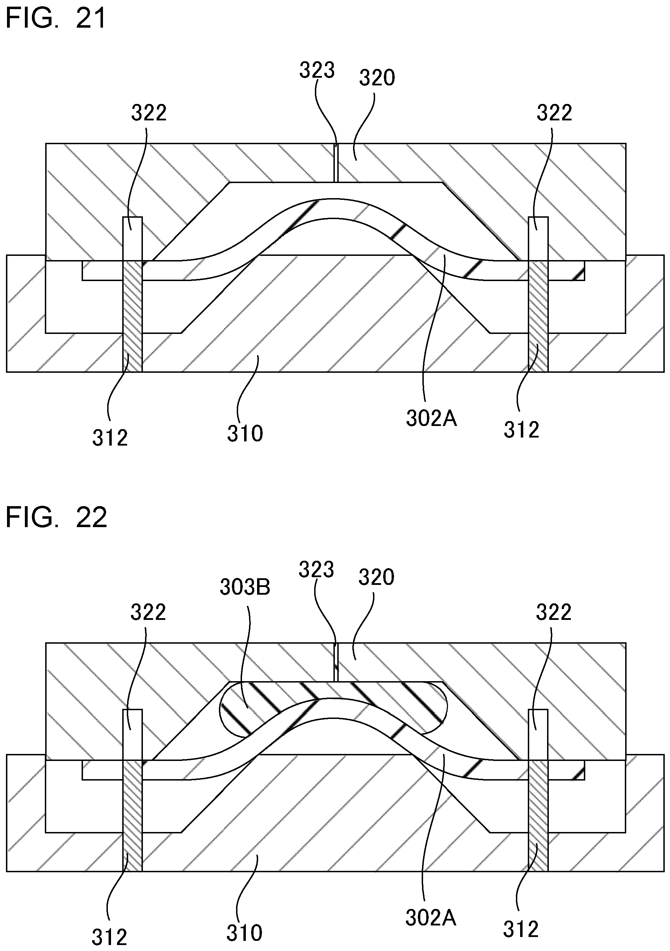

Next, as shown in FIG. 21, the second mold 320 is moved toward the composite material 302A fixed to the first mold 310, and the second mold 320 is brought into contact with the composite material 302A.

Next, as shown in FIG. 22, the injection molding material 303B is injected between the second mold 320 and the composite material 302A from a gate 323 provided in the second mold 320.

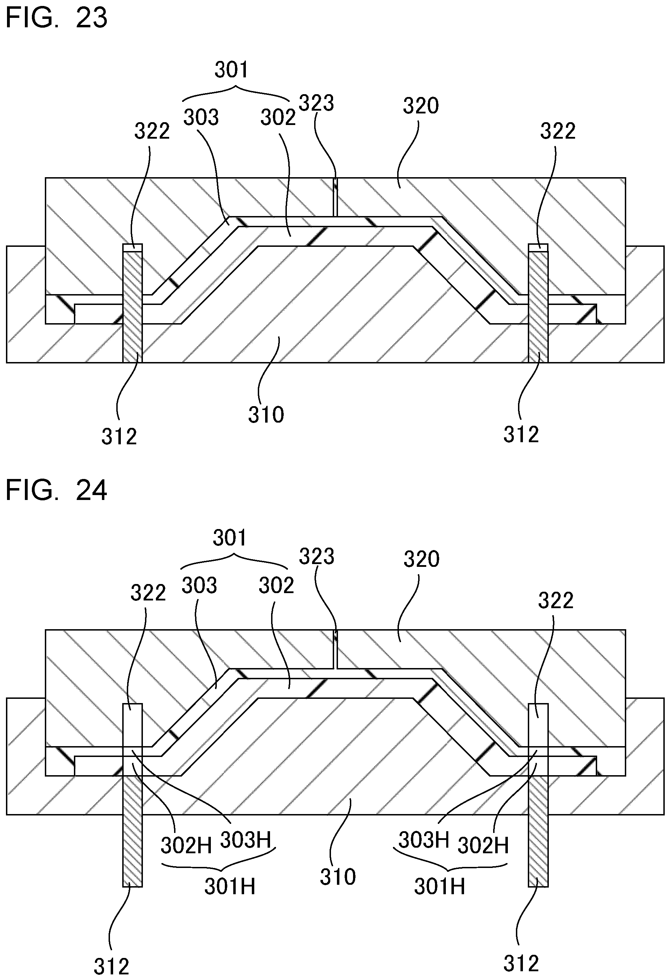

Next, as shown in FIG. 23, the composite material 302A and the injection molding material 303B are pressed in the mold and integrally molded.

At this time, holes 302H are formed at positions of the composite material 302A corresponding to the fixing members 312, and holes 303H are formed at positions of the injection molding material 303B corresponding to the fixing members 312.

Holes 322 into which the fixing members 312 are inserted may be provided at positions of the second mold 320 facing the fixing members 312.

Thereafter, the second mold 320 is moved in a direction away from the first mold 310, and the molded body 301 is taken out from the first mold 310. Thus, the molded body 301 is completed.

As shown in FIG. 24, the fixing members 312 may be moved and pulled out from the composite material 302A and the injection molding material 303B integrally molded. Accordingly, the fixing of the composite material 302A by the fixing members 312 is released. That is, the method may further include a step of releasing the fixing of the composite material 302A by the fixing members 312. The fixing of the composite material 302A by the fixing members 312 may be released after step (3), before step (4), or after step (4). After step (2) of bringing the second mold 320 into contact with the composite material 302A, a step of injecting the injection molding material 303B between the second mold 320 and the composite material 302A may be included before the step of releasing the fixing of the composite material 302A.

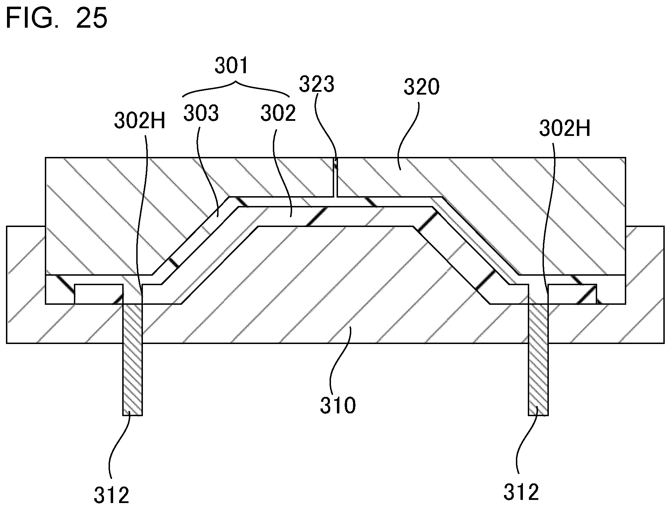

When the holes 301H are not formed in the molded body 301, the fixing members 312 may be moved as shown in FIG. 25 before the composite material 302A and the injection molding material 303B are pressed and integrally molded. That is, the fixing of the composite material 302A by the fixing members 312 may be released after step (3) and before step (4). In this case, even if the holes 302H are formed at the positions of the composite material 302A corresponding to the fixing members 312, when the composite material 302A and the injection molding material 303B are pressed by the first mold 310 and the second mold 320 and integrally molded, the injection molding material 303B flows into the inside of the holes 302H, and the holes 302H are thus filled.

In the above first to fourth embodiments, a case in which the first mold and the second mold which are a pair of male and female molds are used, and the first mold is a fixed mold and the second mold is a movable mold has been described; however, the present invention is not limited thereto. For example, the first mold may be a movable mold, and the second mold may be a fixed mold.

In the above description, a case in which the first mold is a lower mold, the second mold is an upper mold, and the molds are opened and closed when the second mold moves up and down in the direction toward the first mold has been described; however, the molds may be opened and closed when the first mold moves up and down in the direction toward the second mold, for example. Alternatively, the opening and closing may be performed by moving at least one of the first mold and the second mold in a horizontal direction.

[Opening and closing direction of mold]

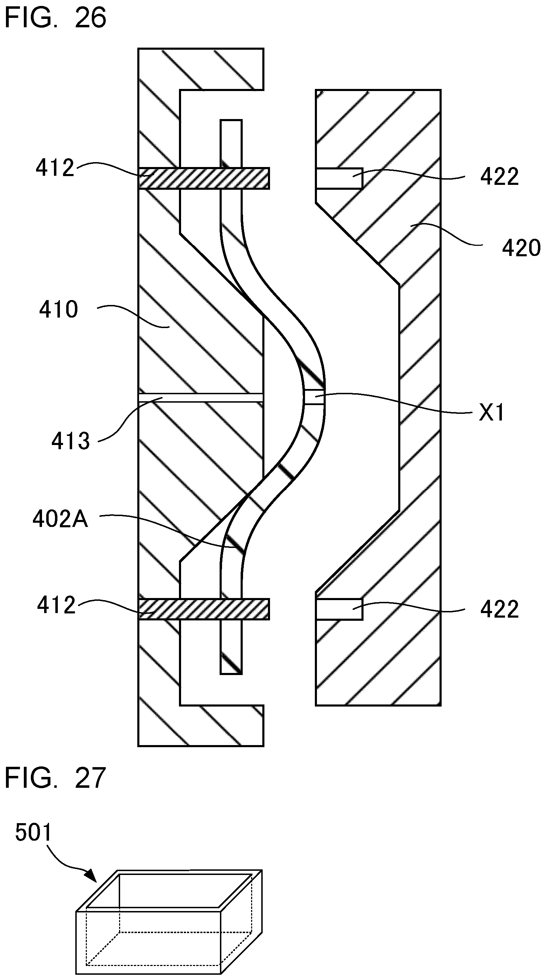

When the first mold is a fixed mold, the second mold is a movable mold, and a molded body is manufactured by opening and closing the molds by moving the second mold in a horizontal direction toward the first mold, it is preferable that at least two fixing members having different positions in a height direction be provided. FIG. 26 is a horizontal cross-sectional view showing a first mold 410 and a second mold 420 provided so as to be openable and closable in a horizontal direction. In FIG. 26, the first mold 410 is a fixed mold, and the second mold 420 is a movable mold. The first mold 410 has fixing members 412 and a gate 413. The first mold 410 is provided with the plurality of fixing members 412 for fixing a composite material 402A to the first mold 410. It is preferable that positions of the plurality of fixing members 412 be different in the horizontal direction. By providing the plurality of fixing members 412 at different positions in the horizontal direction of the first mold 410, it is possible to prevent the composite material 412A from becoming misaligned relative to the first mold 410. The fixing members 412 may be provided at different positions in a height direction. Three or more fixing members 412 may be provided at different positions in the height direction and the horizontal direction.

Holes 422 into which the fixing members 412 are inserted may be provided at positions of the second mold 420 facing the fixing members 412.

[Fixed mold and movable mold]

The fixed mold may move depending on the mold. If the fixed mold moves, the mold with a relatively small moving distance is set as the fixed mold, and the mold with a relatively large moving distance is set as the movable mold.

[Pattern cutting]

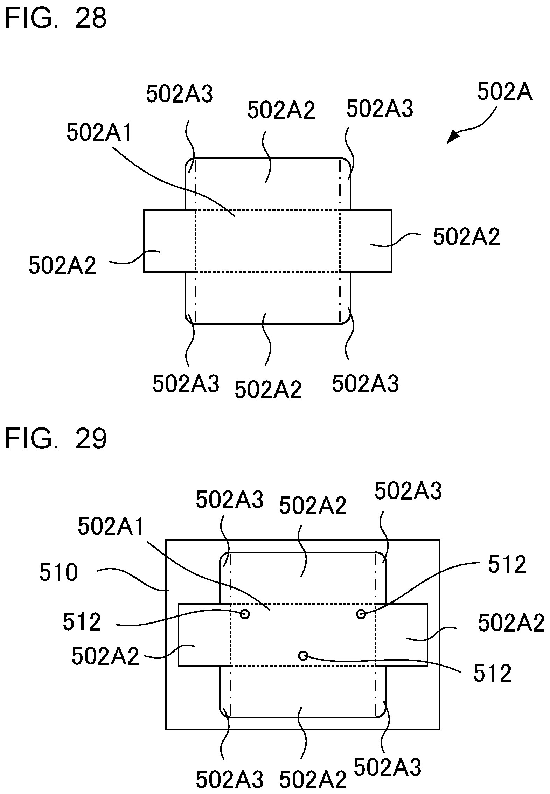

The composite material preferably has a shape cut out by pattern cutting. A pattern-cut product refers to a product obtained by preliminarily cutting the composite material into a desired shape in accordance with the shape of the molded body. The pattern-cut product is not a simple shape such as a square or a rectangle. For example, as shown in FIG. 27, in the case of manufacturing a box-shaped molded body 501, as shown in FIG. 28, a composite material 502A may have a shape obtained by adding a margin to a part constituting a developed figure of a box. In FIG. 28, four parts 502A2 to be side surfaces are provided around a part 502A1 to be a bottom surface of a rectangular box, and margins 502A3 are provided at a portion to be joined when the parts 502A2 to be adjacent side surfaces are molded. In FIG. 28, the margins 502A3 are provided only to one of two parts 502A2 to be adjacent side surfaces, but the margins 502A3 may be provided to both parts.

When the resin contained in the composite material is a thermoplastic resin, and the molding method uses cold pressing, it is particularly preferable that a composite material having a shape cut out by pattern cutting be used. In the case of cold pressing, solidification of the resin is started at the moment when the mold comes into contact with the composite material, and therefore, fluidity at the time of molding is lower than that in the case of a thermosetting resin. Therefore, when the composite material is preliminarily cut into a target shape, it is easy to produce a molded body having the target shape. The pattern cut shape is preferably a shape developed by a computer through inverse molding analysis from a three-dimensional shape of a press-molded body to be manufactured.

[Pattern cutting and fixing member]

When the composite material has a shape cut out by pattern cutting, the first mold is a fixed mold, the second mold is a movable mold, and a molded body is manufactured by opening and closing the molds by moving the second mold in a horizontal direction, the fixing members exhibit a more excellent effect.

FIG. 29 is a front view showing a first mold 510 in a state in which the pattern-cut composite material 502A is fixed by fixing members 512. As shown in FIG. 29, in the part 502A1 to be the bottom surface of the rectangular box, it is preferable to fix the composite material to the first mold 510 by the fixing members 512 at a plurality of locations spaced apart in the horizontal direction, for example.

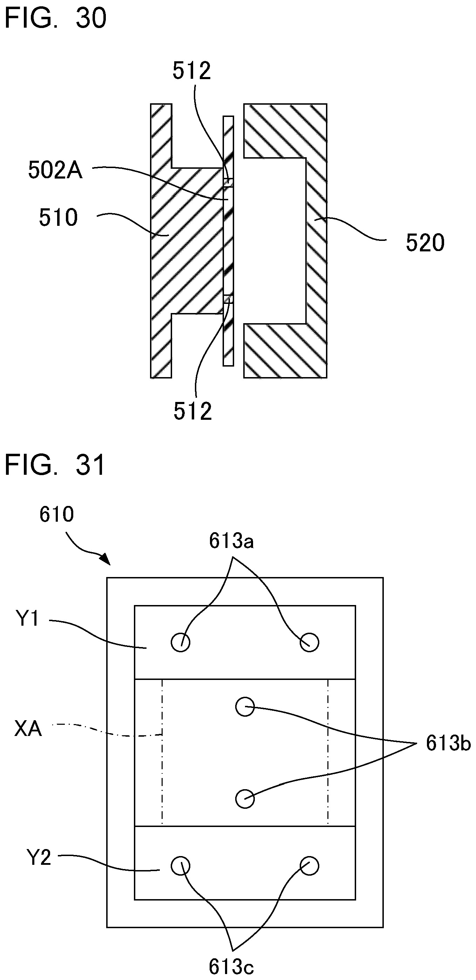

FIG. 30 is a horizontal cross-sectional view showing the first mold 510 and a second mold 520 in which the composite material is fixed by the fixing members. When the molds are opened and closed in a horizontal direction (left-right direction in FIG. 30), the composite material needs to be disposed such that a plate surface is along a vertical direction (a direction perpendicular to the paper surface of FIG. 30). At this time, when the pattern-cut composite material 502A is used, the composite material 502A may sag in an unintended direction compared to a composite material having a simple shape such as a square or a rectangle. Therefore, by appropriately fixing the composite material 502A to the first mold 510 using the fixing members 512, it is possible to suitably prevent the composite material 502A from sagging in an unintended direction.

In FIG. 29, the composite material may be pre-formed such that the parts 502A2 to be the side surfaces and the margins 502A3, which are higher than the part 502A1 to be the bottom surface fixed to the first mold 510 by the fixing members 512, do not lean toward the second mold 520 (see FIG. 30) side and leans toward the first mold 510 side in advance.

[Injection from fixed mold and design property]

Hereinafter, injection from the fixed mold and a design property will be described.

In the method for manufacturing a molded body of the present invention, it is preferable that the first mold be a fixed mold, the second mold be a movable mold, the molding material be an injection molding material, the method include a step of injecting the injection molding material between the first mold and the second mold after step (2) and before step (3), and the injection be performed from the first mold which is a fixed mold. This configuration is preferable because the equipment for the injection from the fixed mold is not too complicated as compared to the injection from the movable mold.

1. Formation of design surface

When injection is performed from the first mold which is a fixed mold, it is preferable that a design surface is formed by the second mold which is a movable mold. This is because a trace of the injection gate remains on a surface formed by the first mold which is a fixed mold, but no trace of the injection gate remains on a surface formed by the second mold which is a movable mold. At this time, the design property of the molded body can be improved by, for example, the following contrivance between the composite material and the second mold. In the present invention, a layer formed between the composite material and the second mold may be referred to as a skin layer.

2. Composite materials and design surface

When injection is performed from the first mold which is a fixed mold, it is preferable to fill the space between the second mold and the composite material with the injection molding material. By filling the space between the second mold, which is a movable mold, and the composite material with the injection molding material, fibers contained in the composite material can be hidden. A skin layer is formed by filling the space between the second mold and the composite material with the injection molding material. As will be described later, the skin layer can be formed by, for example, a method of directing the injection molding material to come around from the outside of the composite material, a method of flowing the injection molding material through a flow hole formed in the composite material, or a method of placing a resin sheet in advance between the composite material and the second mold. The thickness of the skin layer is preferably 50 $\mu$m or more and 300 $\mu$m or less and is preferably 70 $\mu$m or more and 200 $\mu$m or less.

2.1 Position and number of gates

In order to form the skin layer with the injection molding material, the injection molding material may be filled so as to enter the space between the composite material and the cavity wall surface of the mold. In this case, it is preferable that the number of gates for injecting the injection molding material satisfies $0 < n1 < n2$. Here:

n1 is the number of first gates provided in the region (XA) where the composite material is disposed in a plan view of the cavity of the mold; and
n2 is the number of second gates provided in a region other than the region (XA) where the composite material is disposed in a plan view of the cavity of the mold.

For example, in the example shown in FIG. 31, in a first mold 610, two gates 613a are provided in the region Y1, two gates 613b are provided in the region XA, and two gates 613c are provided in the region Y2. The region XA is a region in which the composite material is disposed, and the regions Y1 and Y2 are regions other than the region (XA) in which the composite material is disposed. The gates 613b are first gates provided in the region XA, and the gates 613a and 613c are second gates provided in the regions other than the region XA. In this case, n1 = 2 and n2 = 4, and $0 < n1 < n2$ is satisfied. When $0 < n1 < n2$ is satisfied, since the injection molding material injected from the gates 613a and 613c extends to the region where the composite material is disposed, it is possible to promote entering of the injection molding material between the composite material and the cavity wall surface of the second mold (preferably the movable mold).

2.2 Position of gate and discharge amount

In order to form the skin layer with the injection molding material, the injection molding material may be filled so as to enter the space between the composite material and the cavity wall surface of the mold. In this case, it is preferable that an amount of discharge from the gate for injecting the injection molding material satisfy $0 < V1 < V2$. Here:

V1 is a discharge amount of the injection molding material from the first gates provided in the region (XA) where the composite material is disposed in a plan view of the cavity of the mold;
V2 is a discharge amount of the injection molding material from the second gates provided in the regions other than the region (XA) in which the composite material is disposed in a plan view of the cavity of the mold.

For example, in the example shown in FIG. 31, three gates 613a are provided in the region Y1, six gates 613b are provided in the region XA, and two gates 613c are provided in the region Y2. At this time, it is preferable to satisfy $0 < V1 < V2$, where V1 is the total discharge amount of the injection molding material discharged from the gates 613b and V2 is the total discharge amount of the injection molding material discharged from the gates 613a and 613c.

When $0 < V1 < V2$ is satisfied, since the injection molding material injected from the gates 613a and 613c extends to the region XA where the composite material is disposed, it is possible to promote entering of the injection molding material between the composite material and the cavity wall surface of the second mold (preferably the movable mold).

2.3 Flow hole

When the design surface is formed by the first mold and the space between the first mold and the composite material is filled with the injection molding material, as shown in FIG. 26, for example, it is preferable that one or more flow holes X1 for allowing the injection molding material to pass through the composite material are provided, and the injection molding material injected from the gate 413 of the first mold 410 flows through the flow hole X1 and is injected into the space between the composite material and the second mold 420. When the injection molding material injected from the first mold 410 passes through the flow hole X1, the injection molding material can enter the space between the composite material and the second mold 420. At this time, it is preferable to provide the gate 413 in a region of the first mold 410 where the composite material is disposed.

2.4 Placing of resin sheet

When the design surface is formed by the second mold, it is preferable to dispose a resin sheet between the composite material disposed in the first mold and the second mold. By placing the resin sheet, it is possible to easily form the design surface on a molded body. A resin sheet including no fiber is preferable because transfer properties of the mold mirror surface of the second mold is good. The resin sheet may be disposed on the first mold after the resin sheet is stacked on the composite material, or the resin sheet may be stacked on the composite material after the composite material is disposed on the first mold.

2. 5 Grain

When the design surface is formed by the second mold, the design surface may have a grain shape formed by the second mold. By transferring the mold surface of the second mold to create a grain shape in the molded body, the reinforcing fibers contained in the composite material can be made less conspicuous, and the design properties are improved. A resin-rich layer may be provided on the surface of the composite material so that the grain shape is easily transferred to the composite material by the mold surface of the second mold, or a resin sheet may be disposed between the second mold and the composite material when the composite material is disposed in the first mold.

The present application is based on Japanese Patent Application No. 2022-149322 filed on September 20, 2022 and Japanese Patent Application No. 2022-196925 filed on December 9, 2022, the contents of which are incorporated herein by reference.

REFERENCE SIGNS LIST

> 1, 101, 201, 301, 501 Molded body
> 1H, 2H, 3H, 22, 101H, 102H, 103H, 201H, 202H, 203H, 222, 301H, 302H, 303H, 322, 422 Hole
> 2 Reinforcing part
> 2A, 102A, 202A, 302A, 402A, 502A, 602A Composite material
> 3 Body part
> 3B, 103B Molding material
> 10, 210, 310, 410, 510, 610 First mold
> 11, 211, 311 Cavity
> 12, 212, 312, 412, 512 Fixing member
> 20, 120, 220, 320, 420 Second mold
> 203B, 303B Injection molding material
> 213, 323, 413, 613a, 613b, 613c Gate

**Claims**

1. A method for manufacturing a molded body integrally molded by a composite material containing reinforcing fibers dispersed in an in-plane direction and a molding material having fluidity higher than that of the composite material, the method comprising the following steps (1) to (3):

   (1) fixing the composite material to a first mold by a plurality of fixing members provided in the first mold having a cavity having an area larger than that of the composite material in a plan view;
   (2) moving a second mold toward the composite material fixed to the first mold and bringing the second mold into contact with the composite material; and
   (3) pressing the composite material and the molding material by the first mold and the second mold to integrally mold same.

2. The method for manufacturing a molded body according to claim 1, further comprising a step of releasing the fixing of the composite material by the fixing members.

3. The method for manufacturing a molded body according to claim 1 or 2, comprising a step of stacking the molding material on the composite material before the step (1).

4. The method for manufacturing a molded body according to claim 3, wherein the composite material is fixed to the first mold so that the molding material comes into contact with the first mold in the step (1).

**5.** The method for manufacturing a molded body according to claim 1 or 2, wherein
the composite material is fixed to the first mold such that the molding material is disposed on a side opposite to the first mold in the step (1).

**6.** The method for manufacturing a molded body according to claim 1 or 2, comprising
a step of stacking the molding material on the composite material after the step (1) and before the step (2).

**7.** The method for manufacturing a molded body according to claim 1 or 2, wherein

the molding material is an injection molding material, and
the method comprises a step of injecting the molding material into a space between the first mold and the second mold after the step (2) and before the step (3).

**8.** The method for manufacturing a molded body according to claim 2, wherein

the molding material is an injection molding material, and
the method comprises a step of injecting the molding material into a space between the first mold and the second mold after the step (2) and before the step of releasing the fixing of the composite material by the fixing members.

**9.** The method for manufacturing a molded body according to claim 7 or 8, wherein
the molding material is injected into a space between the first mold and the composite material.

**10.** The method for manufacturing a molded body according to claim 7 or 8, wherein
the molding material is injected into a space between the second mold and the composite material.

**11.** The method for manufacturing a molded body according to any one of claims 1 to 10, wherein
the first mold and the second mold are a pair of male and female molds.

**12.** The method for manufacturing a molded body according to claim 11, wherein

the first mold is a fixed mold, and
the second mold is a movable mold.

**13.** The method for manufacturing a molded body according to claim 11 or 12, wherein

the first mold is a lower mold, and
the second mold is an upper mold.

**14.** The method for manufacturing a molded body according to any one of claims 1 to 13, wherein
the fixing member is a hole forming member for forming a hole in the molded body.

**15.** The method for manufacturing a molded body according to any one of claims 1 to 14, wherein
the reinforcing fibers are randomly dispersed in a two-dimensional direction in an in-plane direction of the composite material.

**16.** The method for manufacturing a molded body according to claim 12, wherein

the molding material is an injection molding material,
the method comprises a step of injecting the injection molding material into a space between the first mold and the second mold after the step (2) and before the step (3), and
injection is performed from the first mold.

**17.** The method for manufacturing a molded body according to claim 16, wherein a design surface is formed by the second mold, and the space between the second mold and the composite material is filled with the injection molding material.

**18.** The method for manufacturing a molded body according to claim 17, wherein one or more flow holes for allowing the injection molding material to pass through the composite material are provided, and the injection molding material injected from the first mold flows through the flow hole and is injected into the space between the first mold and the second mold.

19. The method for manufacturing a molded body according to claim 18, wherein the first mold has a first gate for injecting the injection molding material into a mold in a region in which the composite material is disposed in a plan view.

20. The method for manufacturing a molded body according to claim 16, wherein a design surface is formed by the second mold, and a resin sheet is disposed between the second mold and the composite material.

21. The method for manufacturing a molded body according to claim 17 or 20, wherein the design surface has a grain shape formed by the second mold.

22. The method for manufacturing a molded body according to any one of claims 1 to 12, wherein the first mold is a fixed mold, the second mold is a movable mold, the molded body is manufactured by opening and closing molds by moving the second mold in a horizontal direction, and at least two fixing members having different positions in a height direction are provided.

23. The method for manufacturing a molded body according to any one of claims 1 to 12, wherein the first mold is a fixed mold, the second mold is a movable mold, the molded body is manufactured by opening and closing molds by moving the second mold in a horizontal direction, and at least two fixing members having different positions in the horizontal direction are provided.

24. The method for manufacturing a molded body according to any one of claims 1 to 23, wherein the composite material has a shape cut out by pattern cutting.

25. The method for manufacturing a molded body according to claim 19, wherein

a second gate for injecting the injection molding material is provided in a region of the first mold other than a region in which the composite material is disposed in a plan view, and
the number $n1$ of the first gates and the number $n2$ of the second gates satisfy $0 < n1 < n2$.

26. The method for manufacturing a molded body according to claim 19 or 25, wherein

the first mold has a second gate for injecting the injection molding material in a region other than a region in which the composite material is disposed in a plan view, and
a discharge amount $V1$ of the injection molding material from the first gate and a discharge amount $V2$ of the injection molding material from the second gate satisfy $0 < V1 < V2$.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

EP 4 592 112 A1

FIG. 17

FIG. 18

29

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

## INTERNATIONAL SEARCH REPORT

| International application No. |
| --- |
| **PCT/JP2023/027974** |

| A. | CLASSIFICATION OF SUBJECT MATTER |
| --- | --- |

*B60J 5/10*(2006.01)i; *B29C 43/18*(2006.01)i; *B29C 45/14*(2006.01)i; *B29C 70/42*(2006.01)i
FI:  B60J5/10 R; B29C45/14; B29C70/42; B29C43/18

According to International Patent Classification (IPC) or to both national classification and IPC

| B. | FIELDS SEARCHED |
| --- | --- |

Minimum documentation searched (classification system followed by classification symbols)

B60J5/10; B29C43/18; B29C45/14; B29C70/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-059632 A (KASAI KOGYO CO LTD) 10 March 2005 (2005-03-10) paragraphs [0039]-[0070], fig. 1-15 | 1-4, 6-9, 11-13, 15-17, 19-26 |
| Y | | 5, 10, 14, 18 |
| Y | JP 2009-113548 A (TOYOTA BOSHOKU CORP) 28 May 2009 (2009-05-28) paragraphs [0010]-[0032], fig. 1-7 | 5, 10, 14,18 |
| Y | JP 2001-138356 A (KASAI KOGYO CO LTD) 22 May 2001 (2001-05-22) paragraphs [0040]-[0048], fig. 11-16 | 14, 18 |
| A | JP 2002-137249 A (SUMITOMO CHEM CO LTD) 14 May 2002 (2002-05-14) entire text, all drawings | 1-26 |
| A | JP SUMITOMO CHEM CO LTD A (KASAI KOGYO CO LTD) 23 January 1991 (1991-01-23) entire text, all drawings | 1-26 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 October 2023** | **17 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027974**

| Patent document cited in search report | | | Publication date (day/month/year) | Patent family member(s) | Publication date (day/month/year) |
|---|---|---|---|---|---|
| JP | 2005-059632 | A | 10 March 2005 | (Family: none) | |
| JP | 2009-113548 | A | 28 May 2009 | (Family: none) | |
| JP | 2001-138356 | A | 22 May 2001 | (Family: none) | |
| JP | 2002-137249 | A | 14 May 2002 | (Family: none) | |
| JP | 03-015509 | A | 23 January 1991 | (Family: none) | |

Form PCT/ISA/210 (patent family annex) (January 2015)

**REFERENCES CITED IN THE DESCRIPTION**

**Patent documents cited in the description**

- JP 3413356 B
- JP 5855401 B
- JP H09117922 A
- JP 2020179549 A
- JP 2022149322 A
- JP 2022196925 A